(19) Europäisches Patentamt
European Patent Office
Office européen des brevets

(11) Publication number: **0 151 494**
**B1**

# (12) EUROPEAN PATENT SPECIFICATION

(45) Date of publication of patent specification: **23.11.89**

(51) Int. Cl.[4]: **C 09 K 11/55**, C 09 K 11/61, G 03 C 5/17, G 21 K 4/00

(21) Application number: **85101363.1**

(22) Date of filing: **08.02.85**

## (54) Phosphor, radiation image recording and reproducing method and radiation image storage panel.

(30) Priority: **09.02.84 JP 22169/84**
**09.02.84 JP 22170/84**

(43) Date of publication of application:
**14.08.85 Bulletin 85/33**

(45) Publication of the grant of the patent:
**23.11.89 Bulletin 89/47**

(84) Designated Contracting States:
**BE DE FR GB NL**

(56) References cited:
**EP-A-0 095 741**

(73) Proprietor: **FUJI PHOTO FILM CO., LTD.**
**210 Nakanuma Minami Ashigara-shi**
**Kanagawa 250-01 (JP)**

(72) Inventor: **Nakamura, Takashi**
**c/o Fuji Photo Film Co. Ltd. No. 798, Miyanodai**
**Kaisei-machi Ashigara-kami-gun Kanagawa (JP)**
Inventor: **Takahashi, Kenji**
**c/o Fuji Photo Film Co. Ltd. No. 798, Miyanodai**
**Kaisei-machi Ashigara-kami-gun Kanagawa (JP)**

(74) Representative: **Patentanwälte Grünecker, Kinkeldey, Stockmair & Partner**
**Maximilianstrasse 58**
**D-8000 München 22 (DE)**

**EP 0 151 494 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

Background of the invention

Field of the invention

The present invention relates to a phosphor, a process for the preparation of the same, a radiation image recording and reproducing method utilizing the same, and a radiation image storage panel employing the same. More particularly, the invention relates to a divalent europium activated complex halide phosphor.

Description of the prior art

There is well known a divalent europium activated alkaline earth metal fluorohalide phosphor ($M^{II}FX:Eu^{2+}$, in which $M^{II}$ is at least one alkaline earth metal selected from the group consisting of Ba, Sr and Ca; and X is a halogen other than fluorine), as a divalent europium activated alkaline earth metal halide phosphor. The phosphor gives emission (spontaneous emission) in the near ultraviolet region when exposed to a radiation such as X-rays. The phosphor also gives emission (stimulated emission) in the near ultraviolet region when excited with an electromagnetic wave such as visible light or infrared rays after exposure to a radiation such as X-rays, that is, being a stimulable phosphor.

A radiation image recording and reproducing method utilizing a stimulable phosphor can be employed in place of the conventional radiography utilizing a combination of a radiographic film having an emulsion layer containing a photosensitive silver salt and an intensifying screen as described, for instance, in U.S. Patent No. 4,239,968. The method involves steps of causing a stimulable phosphor to absorb a radiation having passed through an object or having radiated from an object; sequentially exciting (or scanning) the phosphor with an electromagnetic wave such as visible light or infrared rays (stimulating rays) to release the radiation energy stored in the phosphor as light emission (stimulated emission); photoelectrically detecting the emitted light to obtain electric signals; and reproducing the radiation image of the object as a visible image from the electric signals.

In the radiation image recording and reproducing method, a radiation image is obtainable with a sufficient amount of information by applying a radiation to the object at a considerably smaller dose, as compared with the conventional radiography. Accordingly, this method is of great value, especially when the method is used for medical diagnosis.

As for a stimulable phosphor employable in the radiation image recording and reproducing method, almost no stimulable phosphor other than the above-mentioned divalent europium activated alkaline earth metal fluorohalide phosphor has been known.

The present inventors discovered a novel divalent europium activated alkaline earth metal halide phosphor having the following formula:

$$M^{II}X_2 \cdot aM^{II}X'_2{:}xEu^{2+}$$

in which $M^{II}$ is at least one alkaline earth metal selected from the group consisting of Ba, Sr and Ca; each of X and X′ is at least one halogen selected from the group consisting of Cl, Br and I, and $X \neq X'$; and *a* and *x* are numbers satisfying the conditions of $0.1 \leqq a \leqq 10.0$ and $0 < x \leqq 0.2$, respectively, and applied for a patent with respect to said phosphor, a radiation image recording and reproducing method utilizing said phosphor and a radiation image storage panel employing said phosphor (EP—A—0 143 301).

The novel divalent europium activated alkaline earth metal halide phosphor has been confirmed to have a crystal structure different from that of the aforementioned $M^{II}FX:Eu^{2+}$ phosphor on the basis of the X-ray diffraction patterns as described in the above application. This phosphor gives spontaneous emission (peak wavelength: approx. 405 nm) in the near ultraviolet blue region upon exposure to a radiation such as X-rays, ultraviolet rays and cathode rays, and also gives stimulated emission in the near ultraviolet to blue region when excited with an electromagnetic wave having a wavelength within the region of 450—1000 nm after exposure to a radiation such as X-rays, ultraviolet rays and cathode rays. Accordingly, the phosphor is very useful for a radiographic intensifying screen employed in the radiography and for a radiation image storage panel employed in the radiation image recording and reproducing method utilizing a stimulable phosphor.

Summary of the invention

The present invention provides a phosphor obtained by incorporating a specific alkali metal halide into the above-described novel divalent europium activated alkaline earth metal halide phosphor and a process for the preparation of the same.

The phosphor of the invention is a divalent europium activated complex halide phosphor having the formula (I):

$$M^{II}X_2 \cdot aM^{II}X'_2 \cdot bM^{I}X''{:}xEu^{2+} \qquad (I)$$

in which $M^{II}$ is at least one alkaline earth metal selected from the group consisting of Ba, Sr and Ca; $M^{I}$ is at least one alkali metal selected from the group consisting of Rb and Cs; each of X and X′ is at least one halogen selected from the group consisting of Cl, Br and I, and $X \neq X'$; X″ is at least one halogen selected from the group consisting of F, Cl, Br and I; and *a*, *b* and *x* are numbers satisfying the conditions of $0.1 \leqq a \leqq 10.0$, $0 < b \leqq 10.0$ and $0 < x \leqq 0.2$, respectively.

The process for the preparation of the phosphor having the formula (I) of the invention comprises:

mixing starting materials for the phosphor in a stoichiometric ratio corresponding to the formula (II):

$$M^{II}X_2 \cdot aM^{II}X'_2 \cdot bM^{I}X'':xEu \quad (II)$$

in which $M^{II}$, $M^{I}$, X, X', X'', *a*, *b* and *x* have the same meanings as defined above; and

firing the obtained mixture at a temperature within the range of 500—1300°C in a weak reducing atmosphere.

The present invention further provides a radiation image recording and reproducing method utilizing the above phosphor and a radiation image storage panel using said phosphor.

That is, the radiation image recording and reproducing method comprises steps of:

i) causing a layer comprising a divalent europium activated complex halide phosphor having the formula (I) to absorb a radiation having passed through an object or having radiated from an object;

ii) exposing said stimulable phosphor to an electromagnetic wave having a wavelength within the range of 450—1000 nm to release the radiation energy stored therein as light emission; and

iii) detecting the emitted light.

The radiation image storage panel of the invention comprises a support and at least one phosphor layer provided thereon which comprises a binder and a stimulable phosphor dispersed therein, in which at least one phosphor layer contains the divalent europium activated complex halide phosphor having the formula (I).

Brief description of the drawings

Fig. 1 shows spontaneous emission spectra of
$BaCl_2 \cdot BaBr_2 \cdot CsCl:0.001Eu^{2+}$ phosphor,
$BaCl_2 \cdot BaBr_2 \cdot CsBr:0.001Eu^{2+}$ phosphor and
$BaCl_2 \cdot BaBr_2 \cdot CsI:0.001Eu^{2+}$ phosphor
(Curves 1, 2 and 3, respectively), and excitation spectra thereof (Curves, 4, 5 and 6, respectively), which are examples of the divalent europium activated complex halide phosphor according to the invention.

Figs. 2-(1), 2-(2) and 2-(3) show stimulation spectra of the
$BaCl_2 \cdot BaBr_2 \cdot CsCl:0.001Eu^{2+}$ phosphor,
$BaCl_2 \cdot BaBr_2 \cdot CsBr:0.001Eu^{2+}$ phosphor and
$BaCl_2 \cdot BaBr_2 \cdot CsI:0.001Eu^{2+}$ phosphor,
respectively.

Fig. 3 shows stimulated emission spectra of the
$BaCl_2 \cdot BaBr_2 \cdot CsCl:0.001Eu^{2+}$ phosphor,
$BaCl_2 \cdot BaBr_2 \cdot CsBr:0.001Eu^{2+}$ phosphor and
$BaCl_2 \cdot BaBr_2 \cdot CsI:0.001Eu^{2+}$ phosphor
(Curves 1, 2 and 3, respectively).

Fig. 4 shows a relationship between *b* value and an intensity of stimulated emission with respect to

$$BaCl_2 \cdot BaBr_2 \cdot bCsBr:0.001Eu^{2+}$$

phosphor, which is an example of the divalent europium activated complex halide phosphor according to the invention.

Fig. 5 is a schematic view showing the radiation image recording and reproducing method according to the invention.

Fig. 6 shows a relationship between *b* value and an intensity of stimulated emission with respect to

$$BaCl_2 \cdot BaBr_2 \cdot bRbBr:0.001Eu^{2+}$$

phosphor, which is an example of the divalent europium activated complex halide phosphor according to the invention.

Detailed description of the invention

The divalent europium activated complex halide phosphor of the present invention can be prepared, for instance, by a process described below.

As starting materials, the following materials can be employed:

(1) at least two alkaline earth metal halides selected from the group consisting of $BaCl_2$, $SrCl_2$, $CaCl_2$, $BaBr_2$, $SrBr_2$, $CaBr_2$, $BaI_2$, $SrI_2$ and $CaI_2$;

(2) at least one alkali metal halide selected from the group consisting of RbF, CsF, RbCl, CsCl, RbBr, CsBr, RbI and CsI; and

(3) at least one compound selected from the group consisting of europium compounds such as europium halide, europium oxide, europium nitrate and europium sulfate.

As the above starting material (1), two or more kinds of alkaline earth metal halides having a halogen different from each other are employed. Further, ammonium halide ($NH_4X'''$, in which X''' is any one of Cl, Br and I) may be employed as a flux.

In the process for the preparation of the phosphor of the invention, the above-mentioned alkaline earth metal halides (1), alkali metal halide (2) and europium compound (3) are, in the first place, mixed in the stoichiometric ratio corresponding to the formula (II):

$$M^{II}X_2 \cdot aM^{II}X'_2 \cdot bM^{I}X'':xEu \quad (II)$$

in which $M^{II}$ is at least one alkaline earth metal selected from the group consisting of Ba, Sr and Ca; $M^{I}$ is at least one alkali metal selected from the group consisting of Rb and Cs; each of X and X' is at least one halogen selected from the group consisting of Cl, Br and I, and $X \neq X'$; X'' is at least one halogen selected from the group consisting of F, Cl, Br and I; and *a*, *b* and *x* are numbers satisfying the conditions of $0.1 \leqq a \leqq 10.0$, $0 < b \leqq 10.0$ and $0 < x \leqq 0.2$, respectively.

From the viewpoint of enhancement in the luminance of stimulated emission and in the luminance of spontaneous emission, $M^{I}$ in the formula (II) which indicates alkali metal of an additive component is preferably Cs, and the number for *b* indicating the amount of alkali metal is preferably within the range of $0 < b \leqq 2.0$. From the same viewpoint, the number for *a* in the formula (II) which indicates the ratio between $M^{II}X_2$ and $M^{II}X'_2$ is preferably within the range of $0.3 \leqq a \leqq 3.3$ and more preferably of $0.5 \leqq a \leqq 2.0$, and the number for *x* indicating the amount of europium activator is preferably within the range

of $10^{-5} \leqq x \leqq 10^{-2}$.

The mixture of starting materials for the phosphor of the present invention is prepared by any one of the following procedures;

i) simply mixing the starting materials (1), (2) and (3);

ii) mixing the starting materials (1) and (2), heating the obtained mixture at a temperature of not lower than 100°C for several hours and then mixing the heat-treated mixture with the starting material (3); and

iii) mixing the starting materials (1) and (2) in the form of a solution, drying the solution by reduced pressure drying, vacuum drying or spray drying under heating (preferably, 50—200°C), and then mixing the obtained dry product with the starting material (3).

Further, as a modification of the above procedure ii), there may be mentioned a procedure comprising mixture the starting materials (1), (2) and (3) and subjecting the obtained mixture to the heating treatment; or a procedure comprising mixing the starting materials (1) and (3), subjecting the obtained mixture to the heating treatment and mixing the starting material (2) with the heat-treated product. As other modification of the procedure iii), there may be mentioned a procedure comprising mixing the starting materials (1), (2) and (3) in the form of a solution and subjecting the solution to the drying; or a procedure comprising mixing the starting materials (1) and (3) in the form of a solution, subjecting the solution to the drying and mixing the obtained dry product with the starting material (2).

The mixing is carried out using a conventional mixing apparatus such as a variety of mixers, a V-type blender, a ball mill and a rod mill in any case of the above-described procedures i), ii) and iii).

Then, the resulting mixture of the starting materials is placed in a heat-resistant container such as a quartz boat, an alumina crucible or a quartz crucible, and fired in an electric furnace. The temperature for the firing suitably ranges from 500 to 1300°C, and preferably ranges from 700 to 1000°C. The firing period is determined depending upon the amount of the mixture of starting materials, the firing temperature, and suitably ranges from 0.5 to 6 hours. As the firing atmosphere, there can be employed a weak reducing atmosphere such as a nitrogen gas atmosphere containing a small amount of hydrogen gas or a carbon dioxide gas atmosphere containing carbon monoxide gas. A trivalent europium compound is generally employed as the above-mentioned starting material (3) and in the firing stage, the trivalent europium contained in the mixture is reduced into divalent europium by the weak reducing atmosphere.

Through the firing procedure, a powdery phosphor of the present invention is produced. The powdery phosphor thus obtained may be processed in a conventional manner involving a variety of procedures for the preparation of phosphors such as a washing procedure, a drying procedure and a sieving procedure.

The phosphor of the present invention prepared in accordance with the above-described process is a divalent europium activated complex halide phosphor having the formula (I):

$$M^{II}X_2 \cdot aM^{II}X'_2 \cdot bM^{I}X'':xEu^{2+} \quad (I)$$

in which $M^{II}$ is at least one alkaline earth metal selected from the group consisting of Ba, Sr and Ca; $M^{I}$ is at least one alkali metal selected from the group consisting of Rb and Cs; each of X and X' is at least one halogen selected from the group consisting of Cl, Br and I, and $X \neq X'$; X'' is at least one halogen selected from the group consisting of F, Cl, Br and I; and *a*, *b* and *x* are numbers satisfying the conditions of $0.1 \leqq a \leqq 10.0$, $0 < b \leqq 10.0$ and $0 < x \leqq 0.2$, respectively.

It has been confirmed from the X-ray diffraction patterns that the phosphor of the invention prepared by the above-described process has the same crystal structure ($PbCl_2$-type structure) as that of the aforementioned

$$M^{II}X_2 \cdot aM^{II}X'_2:xEu^{2+}$$

phosphor. Further, it has been confirmed that the phosphor of the invention shows a spontaneous emission spectrum, excitation spectrum thereof, stimulated emission spectrum and stimulation spectrum thereof which are similar to those of the

$$M^{II}X_2 \cdot aM^{II}X'_2:xEu^{2+}$$

phosphor.

The divalent europium activated complex halide phosphor of the present invention gives spontaneous emission in the near ultraviolet to blue region (peak wavelength of the emission: approx. 405 nm) upon excitation with a radiation such as X-rays, ultraviolet rays and cathode rays.

Fig. 1 shows examples of spontaneous emission spectra of divalent europium activated complex halide phosphors according to the invention given upon excitation with ultraviolet rays, and excitation spectra thereof:

Curve 1: spontaneous emission spectrum of $BaCl_2 \cdot BaBr_2 \cdot CsCl:0.001Eu^{2+}$ phosphor;
Curve 2: spontaneous emission spectrum of $BaCl_2 \cdot BaBr_2 \cdot CsBr:0.001Eu^{2+}$ phosphor;
Curve 3: spontaneous emission spectrum of $BaCl_2 \cdot BaBr_2 \cdot CsI:0.001Eu^{2+}$ phosphor;
Curve 4: excitation spectrum of $BaCl_2 \cdot BaBr_2 \cdot CsCl:0.001Eu^{2+}$ phosphor;
Curve 5: excitation spectrum of $BaCl_2 \cdot BaBr_2 \cdot CsBr:0.001Eu^{2+}$ phosphor; and
Curve 6: excitation spectrum of $BaCl_2 \cdot BaBr_2 \cdot CsI:0.001Eu^{2+}$ phosphor.

As is clear from Fig. 1, the phosphors according to the invention give spontaneous emission in the near ultraviolet to blue region upon excitation with ultraviolet rays. The peaks of the emission spectra are located toward the longer wavelength side in such an order of X'' of CsX'' constituting the phosphor as Cl (Curve 1), Br (Curve 2) and I (Curve 3).

The spontaneous emission spectra upon excitation with ultraviolet rays and excitation spectra of the divalent europium activated complex halide phosphor of the invention are illustrated above, for the three kinds of phosphors. Also has been confirmed that spontaneous emission spectra and excitation spectra of other phosphors according to the invention are almost the same as those of the above-stated three kinds of phosphors. It has been further confirmed that the spontaneous emission spectrum of the phosphor of the invention given upon excitation with X-rays or cathode rays are almost the same as those given upon excitation with ultraviolet rays which are shown in Fig. 1.

The divalent europium activated complex halide phosphor of the invention also gives stimulated emission in the near ultraviolet to blue region when excited with an electromagnetic wave having a wavelength within the region of 450—1000 nm such as visible light or infrared rays after exposure to a radiation such as X-rays, ultraviolet rays and cathode rays.

Fig. 2 shows examples of stimulation spectra of the divalent europium activated complex halide phosphors of the invention, that is:

Figs. 2-(1): stimulation spectrum of $BaCl_2 \cdot BaBr_2 \cdot CsCl:0.001Eu^{2+}$ phosphor;

Fig. 2-(2): stimulation spectrum of $BaCl_2 \cdot BaBr_2 \cdot CsBr:0.001Eu^{2+}$ phosphor; and

Fig. 2-(3): stimulation spectrum of $BaCl_2 \cdot BaBr_2 \cdot CsI:0.001Eu^{2+}$ phosphor.

As is clear from Fig. 2, the phosphors of the invention give stimulated emission upon excitation with an electromagnetic wave in the wavelength region of 450—1000 nm after exposure to X-rays. The maximum peaks of stimulation spectra are located toward the longer wavelength side in such an order of X″ of CsX″ constituting the phosphor as Cl (1), Br (2) and I (3). Particularly, each phosphor exhibits stimulated emission of high intensity upon excitation with an electromagnetic wave in the wavelength region of 500—850 nm. In this case, the emitted light can be easily separated from the stimulating rays. Based on these facts, the wavelength region of an electromagnetic wave employed as stimulating rays, namely 450—1000 nm, has been decided in the radiation image recording and reproducing method of the present invention.

Fig. 3 shows examples of stimulated emission spectra of the divalent europium activated complex halide phosphors according to the invention:

Curve 1: stimulated emission spectrum of $BaCl_2 \cdot BaBr_2 \cdot CsCl:0.001Eu^{2+}$ phosphor;

Curve 2: stimulated emission spectrum of $BaCl_2 \cdot BaBr_2 \cdot CsBr:0.001Eu^{2+}$ phosphor; and

Curve 3: stimulated emission spectrum of $BaCl_2 \cdot BaBr_2 \cdot CsI:0.001Eu^{2+}$ phosphor.

As is clear from Fig. 3, the phosphors according to the invention give stimulated emission in the near ultraviolet to blue region, and each peak wavelength of the emission spectra is approx. 405 nm. The stimulated emission spectra shown in Fig. 3 is almost the same as the spontaneous emission spectra shown in Fig. 1 (Curves 1, 2 and 3).

The stimulation spectra and stimulated emission spectra of the divalent europium activated complex phosphors according to the present invention are illustrated above with respect to the specific phosphors. It has been confirmed that other phosphors according to the invention show the similar stimulation spectra and stimulated emission spectra as those of the above-mentioned specific phosphors. Thus, they have the similar stimulated emission characteristics to the above-mentioned phosphors.

Fig. 4 graphically shows a relationship between *b* value and an intensity of stimulated emission [emission intensity upon excitation with light emitting diode (wavelength: 780 nm) after exposure to X-rays at 80 kVp] with respect to

$$BaCl_2 \cdot BaBr_2 \cdot bCsBr:0.001Eu^{2+}$$

phosphor. As is evident from Fig. 4, the

$$BaCl_2 \cdot BaBr_2 \cdot bCsBr:0.001Eu^{2+}$$

phosphor having *b* value within a range of $0<b\leqq10.0$ gives stimulated emission. On the basis of this fact, the *b* value range of the divalent europium activated complex halide phosphor of the invention, namely $0<b\leqq10.0$, has been decided. As is also evident from Fig. 4, the phosphor having *b* value within a range of $0<b\leqq2.0$ gives stimulated emission of higher intensity than the phosphor containing no cesium bromide (b=0).

In Fig. 4, the relationship between *b* value and the intensity of stimulated emission is shown for the phosphor in which the ratio between $BaCl_2$ and $BaBr_2$ is 1:1 (a=1). Almost the same relationship is obtained when the *a* value is varied within a range of $0.1\leqq a\leqq10.0$. Further, it has been confirmed that the

$$BaCl_2 \cdot BaBr_2 \cdot bCsBr:0.001Eu^{2+}$$

phosphor has the same tendency as shown in Fig. 4 with respect to the relationship between *b* value and an intensity of spontaneous emission. Also has been confirmed that phosphors according to the present invention having $M^{II}$, $M^{I}$, X, X′ and X″ other than the above-stated ones have the same tendencies in the relationships between *b* value and the intensity of stimulated emission and between *b* value and the intensity of spontaneous emission as shown in Fig. 4.

From the viewpoint of emission properties described hereinbefore, the phosphor of the invention is very useful as a phosphor for the use in a radiation image storage panel employed in the radiation image recording and reproducing method or for a radiographic intensifying screen employed in the conventional radiography, both panel and screen being used in medical radiography such as X-ray photography for medical diagnosis and industrial radiography for non-destructive inspection.

Particularly in the case of employing the phosphor of the invention in the radiation image recording and reproducing method, it is possible to vary the wavelength of stimulating rays for exciting the phosphor because of the wide wavelength region of its stimulation spectrum, namely 450—1000 nm. It means that a source of stimulating rays can be suitably selected according to the purpose. For example, a semiconductor laser (having a wavelength in the infrared region) which is in a small size and needs only weak driving power can be employed as the source of stimulating rays, and accordingly the system for performing the method can be made compact. From the viewpoint of the stimulated emission intensity and of the separation on wavelength between the emitted light and stimulating rays, the stimulating rays are preferred to be an electromagnetic wave having a wavelength within the range of 500—850 nm.

The divalent europium activated complex halide phosphor having the formula (I) is preferably employed in the form of a radiation image storage panel (also referred to as a stimulable phosphor sheet) in the radiation image recording and reproducing method of the invention.

The radiation image storage panel comprises a support and at least one phosphor layer provided on one surface of the support. The phosphor layer comprises a binder and a stimulable phosphor dispersed therein. Further, a transparent protective film is generally provided on the free surface of the phosphor layer (surface not facing the support) to keep the phosphor layer from chemical deterioration or physical shock.

In the radiation image recording and reproducing method employing the stimulable phosphor having the formula (I) in the form of a radiation image storage panel, a radiation having passed through an object or radiated from an object is absorbed by the phosphor layer of the panel to form a radiation image as a radiation energy-stored image on the panel. The panel is then excited (e.g., scanned) with an electromagnetic wave in the wavelength region of 450—1000 nm to release the stored image as stimulated emission. The emitted light is photoelectrically detected to obtain electric signals so that the radiation image of the object can be reproduced as a visible image from the obtained electric signals.

The radiation image recording and reproducing method of the present invention will be described in more detail with respect to an example of a radiation image storage panel containing the stimulable phosphor having the formula (I), by referring to a schematic view shown in Fig. 5.

In Fig. 5 which shows the total system of the radiation image recording and reproducing method of the invention, a radiation generating device 11 such as an X-ray source provides a radiation for irradiating an object 12 therewith; a radiation image storage panel 13 containing the stimulable phosphor having the formula (I) absorbs and stores the radiation having passed through the object 12; a source of stimulating rays 14 provides an electromagnetic wave for releasing the radiation energy stored in the panel 13 as light emission; a photosensor 15 such as a photomultiplier faces the panel 13 for detecting the light emitted by the panel 13 and converting it to electric signals; an image reproducing device 16 is connected with the photosensor 15 to reproduce a radiation image from the electric signals detected by the photosensor 15; a display device 17 is connected with the reproducing device 16 to display the reproduced image in the form of a visible image on a CRT; and a filter 18 is disposed in front of the photosensor 15 to cut off the stimulating rays reflected by the panel 13 and allow only the light emitted by the panel 13 to pass through.

Fig. 5 illustrates an example of the system according to the method of the invention employed for obtaining a radiation-transmission image of an object. However, in the case that the object 12 itself emits a radiation, it is unnecessary to install the above-mentioned radiation generating device 11. Further, the photosensor 15 to the display device 17 in the system can be replaced with other appropriate devices which can reproduce a radiation image having the information of the object 12 from the light emitted by the panel 13.

Referring to Fig. 5, when the object 12 is exposed to a radiation such as X-rays provided by the radiation generating device 11, the radiation passes through the object 12 in proportion to the radiation transmittance of each portion of the object. The radiation having passed through the object 12 impinges upon the radiation image storage panel 13, and is absorbed by the phosphor layer of the panel 13. Thus, a radiation energy-stored image (a kind of latent image) corresponding to the radiation-transmission image of the object 12 is formed on the panel 13.

Thereafter, when the radiation image storage panel 13 is irradiated with an electromagnetic wave having the wavelength within the range of 450—1000 nm, which is provided by the source of stimulating rays 14, the radiation energy-stored image formed on the panel 13 is released as light emission. The intensity of so released light is in proportion to the intensity of the radiation energy which has been absorbed by the phosphor layer of the panel 13. The light signals corresponding to the intensity of the emitted light are converted to electric signals by means of the photosensor 15, the electric signals are reproduced as an image in the image reproducing device 16, and the reproduced image is displayed on the display device 17.

The detection of the radiation image stored in the panel 13 can be, for example, carried out by scanning the panel with the electromagnetic wave such as a laser beam provided by the source of stimulating rays 14 and detecting the light emitted from the panel 13 under scanning by means of the photosensor 15 such as photomultiplier to sequentially obtain electric signals.

In the radiation image recording and reproducing method of the present invention, there is no specific limitation on the radiation employable for exposure of an object to obtain a radiation transmittance image thereof, as far as the above-described phosphor gives stimulated emission upon excitation with the electromagnetic wave after exposure to the radiation. Examples of the radiation employable in the invention include those generally known, such as X-rays, cathode rays and ultraviolet rays. Likewise, there is no specific limitation on the radiation radiating from an object for obtaining a radiation image thereof, as far as the radiation can be absorbed by the above-described phosphor to serve as an energy source for producing the stimulated emission. Examples of the radiation include γ-rays, α-rays and β-rays.

As the source of stimulating rays for exciting the phosphor which has absorbed the radiation having passed through or radiated from the object, there can be employed, for instance, light sources providing light having a band spectrum distribution in the wavelength region of 450—1000 nm; and light sources providing light having a single wavelength or more in said region such as an Ar ion laser, a Kr ion laser, a He-Ne laser, a ruby laser, a semiconductor laser, a glass laser, a YAG laser, a dye laser and a light emitting diode (LED). Among the above-mentioned sources of stimulating rays, the lasers are preferred because the radiation image storage panel is exposed thereto with a high energy density per unit area. Particularly preferred are a He-Ne laser, Ar ion laser and Kr ion laser. The semiconductor laser is also preferred, because its size is small, it can be driven by a weak electric power and its output power can be easily stabilized because of the direct modulation thereof.

The radiation image storage panel employable in the radiation image recording and reproducing method of the invention will be described.

The radiation image storage panel, as described hereinbefore, comprises a support and at least one phosphor layer provided thereon which comprises a binder and the above-described divalent europium activated complex halide phosphor having the formula (I) dispersed therein.

The radiation image storage panel having such structure can be prepared, for instance, in the manner described below.

Examples of the binder to be employable in the phosphor layer include: natural polymers such as proteins (e.g. gelatin), polysaccharides (e.g. dextran) and gum arabic; and synthetic polymers such as polyvinyl butyral, polyvinyl acetate, nitrocellulose, ethylcellulose, vinylidene chloride-vinyl chloride copolymer, polyalkyl (meth)acrylate, vinyl chloride-vinyl acetate copolymer, polyurethane, cellulose acetate, butyrate, polyvinyl alcohol, and linear polyester. Particularly preferred are nitrocellulose, linear polyester, polyalkyl (meth)acrylate, a mixture of nitrocellulose and linear polyester, and a mixture of nitrocellulose and polyalkyl (meth)acrylate.

The phosphor layer can be formed on a support, for instance, by the following procedure.

In the first place, the stimulable phosphor particles and a binder are added to an appropriate solvent, and then they are mixed to prepare a coating dispersion of the phosphor particles in the binder solution.

Examples of the solvent employable in the preparation of the coating dispersion include lower alcohols such as methanol, ethanol, n-propanol and n-butanol; chlorinated hydrocarbons such as methylene chloride and ethylene chloride; ketones such as acetone, methyl ethyl ketone and methyl isobutyl ketone; esters of lower alcohols with lower aliphatic acids such as methyl acetate, ethyl acetate and butyl acetate; ethers such as dioxane, ethylene glycol monoethylether and ethylene glycol monoethyl ether; and mixtures of the above-mentioned compounds.

The ratio between the binder and the phosphor in the coating dispersion may be determined according to the characteristics of the aimed radiation image storage panel and the nature of the phosphor employed. Generally, the ratio therebetween is within the range of from 1:1 to 1:100 (binder:phosphor, by weight), preferably from 1:8 to 1:40.

The coating dispersion may contain a dispersing agent to assist the dispersibility of the phosphor particles therein, and also contain a variety of additives such as a plasticizer for increasing the bonding between the binder and the phosphor particles in the phosphor layer. Examples of the dispersing agent include phthalic acid, stearic acid, caproic acid and a hydrophobic surface active agent. Examples of the plasticizer include phosphates such as triphenyl phosphate, tricresyl phosphate and diphenyl phosphate; phthalates such as diethyl phthalate and dimethoxyethyl phthalate; glycolates such as ethylphthalyl ethyl glycolate and butylphthalyl butyl glycolate; and polyesters of polyethylene glycols with aliphatic dicarboxylic acids such as polyester of triethylene glycol with adipic acid and polyester of diethylene glycol with succinic acid.

The coating dispersion containing the phosphor particles and the binder prepared as described above is applied evenly to the surface of a support to form a layer of the coating dispersion. The coating procedure can be carried out by a conventional method such as a method using a doctor blade, a roll coater or a knife coater.

A support material employed in the present invention can be selected from those employed in the conventional radiographic intensifying screens or those employed in the known radiation image storage panels. Examples of the support material include plastic films such as films of cellulose acetate, polyester, polyethylene terephthalate, polyamide, polyimide, triacetate and polycarbonate; metal sheets such as aluminum

foil and aluminum alloy foil; ordinary papers; baryta paper; resin-coated papers; pigment papers containing titanium dioxide; and papers sized with polyvinyl alcohol. From the viewpoint of characteristics of a radiation image storage panel as an information recording material, a plastic film is preferably employed as the support material of the invention. The plastic film may contain a light-absorbing material such as carbon black, or may contain a light-reflecting material such as titanium dioxide. The former is appropriate for preparing a high-sharpness type radiation image storage panel, while the latter is appropriate for preparing a high-sensitive type radiation image storage panel.

In the preparation of a known radiation image storage panel, one or more additional layers are occasionally provided between the support and the phosphor layer, so as to enhance the adhesion between the support and the phosphor layer, or to improve the sensitivity of the panel or the quality of an image provided thereby. For instance, a subbing layer or an adhesive layer may be provided by coating a polymer material such as gelatin over the surface of the support on the phosphor layer side. Otherwise, a light-reflecting layer or a light-absorbing layer may be provided by forming a polymer material layer containing a light-reflecting material such as titanium dioxide or a light-absorbing material such as carbon black. In the invention, one or more of these additional layers may be provided.

As described in U.S. Patent Application No. 496,278 (the whole content of which is described in European Patent Publication No. 92241), the phosphor layer-side surface of the support (or the surface of an adhesive layer, light-reflecting layer, or light-absorbing layer in the case that such layers are provided on the phosphor layer) may be provided with protruded and depressed portions for enhancement of the sharpness of radiation image, and the constitution of those protruded and depressed portions can be selected depending on the purpose of the radiation image storage panel.

After applying the coating dispersion to the support as described above, the coating dispersion is then heated slowly to dryness so as to complete the formation of a phosphor layer. The thickness of the phosphor layer varies depending upon the characteristics of the aimed radiation image storage panel, the nature of the phosphor, the ratio between the binder and the phosphor. Generally, the thickness of the phosphor layer is within the range of from 20 µm to 1 mm, preferably from 50 to 500 µm.

The phosphor layer can be provided on the support by the methods other than that given in the above. For instance, the phosphor layer is initially prepared on a sheet (false support) such as a glass plate, metal plate or plastic sheet using the aforementioned coating dispersion and then thus prepared phosphor layer is overlaid on the genuine support by pressing or using an adhesive agent.

The phosphor layer placed on the support can be in the form of a single layer or in the form of plural (two or more) layers. When the plural phosphor layers are placed, at least one layer contains the aforementioned divalent europium activated complex halide phosphor having the formula (I), and the plural layers may be placed in such a manner that a layer nearer to the surface shows stimulated emission of higher intensity. In any case, that is, in either the single phosphor layer or plural phosphor layers, a variety of known stimulable phosphors are employable in combination with the above-mentioned stimulable phosphor.

Examples of the stimulable phosphor employable in combination with the stimulable phosphor of the invention include the aforementioned phosphor and the phosphors described below:

ZnS:Cu,Pb, $BaO \cdot xAl_2O_3$:Eu, in which $x$ is a number satisfying the condition of $0.8 \leqq x \leqq 10$, and

$$M^{II}O \cdot xSiO_2:A,$$

in which $M^{II}$ is at least one divalent metal selected from the group consisting of Mg, Ca, Sr, Zn, Cd and Ba, A is at least one element selected from the group consisting of Ce, Tb, Eu, Tm, Pb, Tl, Bi and Mn, and $x$ is a number satisfying the condition of $0.5 \leqq x \leqq 2.5$, as described in U.S. Patent No. 4,326,078;

$(Ba_{1-x-y},Mg_x,Ca_y)FX:aEu^{2+}$, in which X is at least one element selected from the group consisting of Cl and Br, $x$ and $y$ are numbers satisfying the conditions of $0<x+y \leqq 0.6$, and $xy=0$, and $a$ is a number satisfying the condition of $10^{-6} \leqq a \leqq 5 \times 10^{-2}$, as described in Japanese Patent Provisional Publication No. 55(1980)-12143; and

LnOX:xA, in which Ln is at least one element selected from the group consisting of La, Y, Gd and Lu, X is at least one element selected from the group consisting of Cl and Br, A is at least one element selected from the group consisting of Ce and Tb, and $x$ is a number satisfying the condition of $0<x<0.1$, as described in above-mentioned U.S. Patent No. 4,236,078.

A radiation image storage panel generally has a transparent film on a free surface of a phosphor layer to physically and chemically protect the phosphor layer. In the panel of the present invention, it is preferable to provide a transparent film for the same purpose.

The transparent film can be provided on the phosphor layer by coating the surface of the phosphor layer with a solution of a transparent polymer such as a cellulose derivative (e.g. cellulose acetate or nitrocellulose), or a synthetic polymer (e.g. polymethyl methacrylate, polyvinyl butyral, polyvinyl formal, polycarbonate, polyvinyl acetate, or vinyl chloride-vinyl acetate copolymer), and drying the coated solution. Alternatively, the transparent film can be provided on the phosphor layer by beforehand preparing it from a polymer such as polyethylene terephthalate, polyethylene, polyvinylidene chloride or polyamide, followed by placing and

fixing it onto the phosphor layer with an appropriate adhesive agent. The transparent protective film preferably has a thickness within the range of 0.1 to 20 µm.

The present invention will be illustrated by the following examples, but these examples by no means restrict the invention.

Example 1

To 800 ml of distilled water ($H_2O$) were added 333.2 g of barium bromide ($BaBr_2 \cdot 2H_2O$), 244.3 g of barium chloride ($BaCl_2 \cdot 2H_2O$), 212.8 g of cesium bromide (CsBr) and 0.783 g of europium bromide ($EuBr_3$), and they were mixed to obtain an aqueous solution. The aqueous solution was dried at 60°C under reduced pressure for 3 hours and further dried at 150°C under vacuum for another 3 hours to obtain a mixture of the starting materials for the preparation of a phosphor.

The mixture thus obtained was placed in an alumina crucible, which was, in turn, placed in a high-temperature electric furnace. The mixture was then fired at 900°C for 1.5 hours under a carbon dioxide atmosphere containing carbon monoxide. After the firing was complete, the curcible was taken out of the furnace and allowed to stand for cooling. Thus, a powdery divalent europium activated complex halide phosphor

$$(BaCl_2 \cdot BaBr_2 \cdot CsBr:0.001Eu^{2+})$$

was obtained.

Example 2

The procedure of Example 1 was repeated except for using 168.4 g of cesium chloride (CsCl) instead of cesium bromide, to obtain a powdery divalent europium activated complex halide phosphor

$$(BaCl_2 \cdot BaBr_2 \cdot CsCl:0.001Eu^{2+}).$$

Example 3

The procedure of Example 1 was repeated except for using 259.8 g of cesium iodide (CsI) instead of cesium bromide, to obtain a powdery divalent europium activated complex halide phosphor

$$(BaCl_2 \cdot BaBr_2 \cdot CsI:0.001Eu^{2+}).$$

The phosphors prepared in Examples 1 through 3 were excited with ultraviolet rays to measure spontaneous emission spectra and excitation spectra.

The results are shown in Fig. 1.

In Fig. 1, Curves 1 to 6 correspond to the following spectra:

1: spontaneous emission spectrum of $BaCl_2 \cdot BaBr_2 \cdot CsCl:0.001Eu^{2+}$ phosphor (Example 2);
2: spontaneous emission spectrum of $BaCl_2 \cdot BaBr_2 \cdot CsBr:0.001Eu^{2+}$ phosphor (Example 1);
3: spontaneous emission spectrum of $BaCl_2 \cdot BaBr_2 \cdot CsI:0.001Eu^{2+}$ phosphor (Example 3);
4: excitation spectrum of $BaCl_2 \cdot BaBr_2 \cdot CsCl:0.001Eu^{2+}$ phosphor (Example 2);
5: excitation spectrum of $BaCl_2 \cdot BaBr_2 \cdot CsBr:0.001Eu^{2+}$ phosphor (Example 1); and
6: excitation spectrum of $BaCl_2 \cdot BaBr_2 \cdot CsI:0.001Eu^{2+}$ phosphor (Example 3).

Further, the phosphors were excited with a light whose wavelength was varied in the range of 450—1000 nm after exposure to X-rays at 80 kVp, to measure stimulation spectra at the peak wavelength of the emission (405 nm). The results are shown in Figs. 2-(1) through 2-(3):

(1): stimulation spectrum of $BaCl_2 \cdot BaBr_2 \cdot CsCl:0.001Eu^{2+}$ phosphor (Example 2);
(2): stimulation spectrum of $BaCl_2 \cdot BaBr_2 \cdot CsBr:0.001Eu^{2+}$ phosphor (Example 1); and
(3): stimulation spectrum of $BaCl_2 \cdot BaBr_2 \cdot CsI:0.001Eu^{2+}$ phosphor (Example 3).

The phosphors were excited with LED (wavelength: 780 nm) after exposure to X-rays at 80 kVp, to measure stimulated emission spectra. The results are shown in Fig. 3.

In Fig. 3, Curves 1 to 3 correspond to the following spectra:

1: stimulated emission spectrum of $BaCl_2 \cdot BaBr_2 \cdot CsCl:0.001Eu^{2+}$ phosphor (Example 2);
2: stimulated emission spectrum of $BaCl_2 \cdot BaBr_2 \cdot CsBr:0.001Eu^{2+}$ phosphor (Example 1); and
3: stimulated emission spectrum of $BaCl_2 \cdot BaBr_2 \cdot CsI:0.001Eu^{2+}$ phosphor (Example 3).

Example 4

The procedure of Example 1 was repeated except that cesium bromide (CsBr) was used in the amount of 2.13 g, to obtain a powdery divalent europium activated complex halide phosphor

$$(BaCl_2 \cdot BaBr_2 \cdot 0.01CsBr:0.001Eu^{2+}).$$

The phosphors prepared in Examples 1 through 4 were excited with a light having a wavelength of 780 nm after exposure to X-rays at 80 kVp, to evaluate the intensity of stimulated emission.

The results on the evaluation of the phosphors are set forth in Table 1, wherein the intensity of stimulated emission is represented by a relative value based on that of

$$BaCl_2 \cdot BaBr_2:0.001Eu^{2+}$$

phosphor (prepared according to the aforementioned EP—A—0 143 301) being 100 under the same conditions.

TABLE 1

| Example | Relative intensity of stimulated emission |
|---|---|
| 1 | 140 |
| 2 | 105 |
| 3 | 120 |
| 4 | 115 |

Example 5

The procedure of Example 1 was repeated except for using 165.4 g of rubidium bromide (RbBr) instead of cesium bromide, to obtain a powdery divalent europium activated complex halide phosphor

$$(BaCl_2 \cdot BaBr_2 \cdot RbBr:0.001Eu^{2+}).$$

Further, the amount of rubidium bromide was varied within a range of 0—10.0 moles per 1 mol of $BaCl_2 \cdot BaBr_2$, to obtain a variety of powdery divalent europium activated complex halide phosphors

$$(BaCl_2 \cdot BaBr_2 \cdot bRbBr:0.001Eu^{2+}).$$

The phosphors prepared in Examples 5 were excited with LED (wavelength: 780 nm) after exposure to X-rays at 80 kVp, to measure the intensity of stimulated emission. The results are shown in Fig. 6.

Fig. 6 graphically shows a relationship between the amount of rubidium bromide (*b* value) and an intensity of stimulated emission with respect to

$$BaCl_2 \cdot BaBr_2 \cdot bRbBr:0.001Eu^{2+}$$

phosphor.

Example 6

To a mixture of the powdery divalent europium activated complex halide phosphor

$$(BaCl_2 \cdot BaBr_2 \cdot CsBr:0.001Eu^{2+})$$

obtained in Example 1 and a linear polyester resin were added successively methyl ethyl ketone and nitrocellulose (nitrification degree: 11.5%), to prepare a dispersion containing the phosphor and the binder (10:1, by weight). Subsequently, tricresyl phosphate, n-butanol and methyl ethyl ketone were added to the dispersion. The mixture was sufficiently stirred by means of a propeller agitator to obtain a homogeneous coating dispersion having a viscosity of 25—35 Pa · s (at 25°C).

The coating dispersion was applied to a polyethylene terephthalate sheet containing titanium dioxide (support, thickness: 250 μm) placed horizontally on a glass plate. The application of the coating dispersion was carried out using a doctor blade. The support having a layer of the coating dispersion was then placed in an oven and heated at a temperature gradually rising from 25 to 100°C. Thus, a phosphor layer having a thickness of 250 μm was formed on the support.

On the phosphor layer was placed a transparent polyethylene terephthalate film (thickness: 12 μm; provided with a polyester adhesive layer on one surface) to combine the transparent film and the phosphor layer with the adhesive layer.

Thus, a radiation image storage panel consisting essentially of a support, a phosphor layer and a transparent protective film was prepared.

Example 7

The procedure of Example 6 was repeated except for employing the

$$BaCl_2 \cdot BaBr_2 \cdot RbBr:0.001Eu^{2+}$$

phosphor obtained in Example 5 instead of the

$$BaCl_2 \cdot BaBr_2 \cdot RbBr:0.001Eu^{2+}$$

phosphor, to prepare a radiation image storage panel consisting essentially of a support, a phosphor layer and a transparent protective film.

The radiation image storage panels prepared in Examples 6 and 7 were measured on the sensitivity (i.e., intensity of stimulated emission) when excited with a light of 780 nm after exposure to X-rays at 80 kVp.

The results on the evaluation of the panels are set forth in Table 2, wherein the sensitivity of the panel is represented by a relative value based on that of a panel, which was prepared by repeating the procedure of Example 6 except for employing

$$BaCl_2 \cdot BaBr_2:0.001Eu^{2+}$$

phosphor (prepared according to the aforementioned EP—A—0 143 301), being 100 under the same conditions.

TABLE 2

| Example | Relative sensitivity |
|---|---|
| 6 | 140 |
| 7 | 110 |

**Claims**

1. A divalent europium activated complex halide phosphor having the formula (I):

$$M^{II}X_2 \cdot aM^{II}X'_2 \cdot bM^{I}X'':xEu^{2+} \qquad (I)$$

in which $M^{II}$ is at least one alkaline earth metal selected from the group consisting of Ba, Sr and Ca; $M^{I}$ is at least one alkali metal selected from the group consisting of Rb and Cs; each of X and X' is at least one halogen selected from the group consisting of Cl, Br and I, and X≠X'; X'' is at least one halogen selected from the group consisting

of F, Cl, Br and I; and *a*, *b* and *x* are numbers satisfying the conditions of $0.1 \leqq a \leqq 10.0$, $0 < b \leqq 10.0$ and $0 < x \leqq 0.2$, respectively.

2. The phosphor as claimed in claim 1, in which *a* in the formula (I) is a number satisfying the condition of $0.3 \leqq a \leqq 3.3$.

3. The phosphor as claimed in claim 2, in which *a* in the formula (I) is a number satisfying the condition of $0.5 \leqq a \leqq 2.0$.

4. The phosphor as claimed in claim 1, in which *b* in the formula (I) is a number satisfying the condition of $0 < b \leqq 2.0$.

5. The phosphor as claimed in claim 1, in which $M^{II}$ in the formula (I) is Ba.

6. The phosphor as claimed in claim 1, in which each of X and X′ in the formula (I) is Cl or Br.

7. The phosphor as claimed in claim 1, in which $M^{I}$ in the formula (I) is Cs.

8. The phosphor as claimed in claim 1, in which X″ in the formula (I) is Br.

9. The phosphor as claimed in claim 1, in which *x* in the formula (I) is a number satisfying the condition of $10^{-5} \leqq x \leqq 10^{-2}$.

10. A process for the preparation of a divalent europium activated complex halide phosphor having the formula (I):

$$M^{II}X_2 \cdot aM^{II}X'_2 \cdot bM^{I}X'':xEu^{2+} \qquad (I)$$

in which $M^{II}$ is at least one alkaline earth metal selected from the group consisting of Ba, Sr and Ca; $M^{I}$ is at least one alkali metal selected from the group consisting of Rb and Cs; each of X and X′ is at least one halogen selected from the group consisting of Cl, Br and I, and $X \neq X'$; X″ is at least one halogen selected from the group consisting of F, Cl, Br and I; and *a*, *b* and *x* are numbers satisfying the conditions of $0.1 \leqq a \leqq 10.0$, $0 < b \leqq 10.0$ and $0 < x \leqq 0.2$, respectively,

which comprises:

mixing starting materials for the phosphor in a stoichiometric ratio corresponding to the formula (II):

$$M^{II}X_2 \cdot aM^{II}X'_2 \cdot bM^{I}X'':xEu \qquad (II)$$

in which $M^{II}$, $M^{I}$, X, X′, X″, *a*, *b* and *x* have the same meanings as defined above; and

firing the obtained mixture at a temperature within the range of 500—1300°C in a weak reducing atmosphere.

11. The process as claimed in claim 10, in which *a* in the formula (II) is a number satisfying the condition of $0.3 \leqq a \leqq 3.3$.

12. The process as claimed in claim 11, in which *a* in the formula (II) is a number satisfying the condition of $0.5 \leqq a \leqq 2.0$.

13. The process as claimed in claim 10, in which *b* in the formula (II) is a number satisfying the condition of $0 < b \leqq 2.0$.

14. The process as claimed in claim 10, in which $M^{II}$ in the formula (II) is Ba.

15. The process as claimed in claim 10, in which each of X and X′ in the formula (II) is Cl or Br.

16. The process as claimed in claim 10, in which $M^{I}$ in the formula (II) is Cs.

17. The process as claimed in claim 10 in which X″ in the formula (II) is Br.

18. The process as claimed in claim 10, in which *x* in the formula (II) is a number satisfying the condition of $10^{-5} \leqq x \leqq 10^{-2}$.

19. The process as claimed in claim 10, in which said mixture is fired at a temperature within the range of 700—1000°C.

20. A radiation image recording and reproducing method comprising steps of:

i) causing a layer comrpising a divalent europium activated complex halide phosphor having the formula (I):

$$M^{II}X_2 \cdot aM^{II}X'_2 \cdot bM^{I}X'':xEu^{2+} \qquad (I)$$

in which $M^{II}$ is at least one alkaline earth metal selected from the group consisting of Ba, Sr and Ca; $M^{I}$ is at least one alkali metal selected from the group consisting of Rb and Cs; each of X and X′ is at least one halogen selected from the group consisting of Cl, Br and I, and $X \neq X'$; X″ is at least one halogen selected from the group consisting of F, Cl, Br and I; and *a*, *b* and *x* are numbers satisfying the conditions of $0.1 \leqq a \leqq 10.0$, $0 < b \leqq 10.0$ and $0 < x \leqq 0.2$, respectively, to absorb a radiation having passed through an object or having radiated from an object;

ii) exposing said stimulable phosphor to an electromagnetic wave having a wavelength within the range of 450—1000 nm to release the radiation energy stored therein as light emission; and

iii) detecting the emitted light.

21. The radiation image recording and reproducing method as claimed in claim 20, in which *a* in the formula (I) is a number satisfying the condition of $0.3 \leqq a \leqq 3.3$.

22. The radiation image recording and reproducing method as claimed in claim 21, in which *a* in the formula (I) is a number satisfying the condition of $0.5 \leqq a \leqq 2.0$.

23. The radiation image recording and reproducing method as claimed in claim 20, in which *b* in the formula (I) is a number satisfying the condition of $0 < b \leqq 2.0$.

24. The radiation image recording and reproducing method as claimed in claim 20, in which $M^{II}$ in the formula (I) is Ba.

25. The radiation image recording and reproducing method as claimed in claim 20, in which each of X and X′ in the formula (I) is Cl or Br.

26. The radiation image recording and reproducing method as claimed in claim 20, in which $M^{I}$ in the formula (I) is Cs.

27. The radiation image recording and reproducing method as claimed in claim 20, in which X″ in the formula (I) is Br.

28. The radiation image recording and reproducing method as claimed in claim 20, in which

$x$ in the formula (I) is a number satisfying the condition of $10^{-5} \leqq x \leqq 10^{-2}$.

29. The radiation image recording and reproducing method as claimed in claim 20, in which said electromagnetic wave is one having a wavelength within the range of 500—850 nm.

30. The radiation image recording and reproducing method as claimed in claim 20, in which said electromagnetic wave is a laser beam.

31. A radiation image storage panel comprising a support and at least one phosphor layer provided thereon which comprises a binder and a stimulable phosphor dispersed therein, in which at least one phosphor layer contains a divalent europium activated complex halide phosphor having the formula (I):

$$M^{II}X_2 \cdot aM^{II}X'_2 \cdot bM^{I}X'':xEu^{2+} \qquad (I)$$

in which $M^{II}$ is at least one alkaline earth metal selected from the group consisting of Ba, Sr and Ca; $M^{I}$ is at least one alkali metal selected from the group consisting of Rb and Cs; each of X and X' is at least one halogen selected from the group consisting of Cl, Br and I, and $X \neq X'$; X'' is at least one halogen selected from the group consisting of F, Cl, Br and I; and $a$, $b$ and $x$ are numbers satisfying the conditions of $0.1 \leqq a \leqq 10.0$, $0 < b \leqq 10.0$ and $0 < x \leqq 0.2$, respectively.

32. The radiation image storage panel as claimed in claim 31, in which $a$ in the formula (I) is a number satisfying the condition of $0.3 \leqq a \leqq 3.3$.

33. The radiation image storage panel as claimed in claim 32, in which $a$ in the formula (I) is a number satisfying the condition of $0.5 \leqq a \leqq 2.0$.

34. The radiation image storage panel as claimed in claim 31, in which $b$ in the formula (I) is a number satisfying the condition of $0 < b \leqq 2.0$.

35. The radiation image storage panel as claimed in claim 31, in which $M^{II}$ in the formula (I) is Ba.

36. The radiation image storage panel as claimed in claim 31, in which each of X and X' in the formula (I) is Cl or Br.

37. The radiation image storage panel as claimed in claim 31, in which $M^{I}$ in the formula (I) is Cs.

38. The radiation image storage panel as claimed in claim 31, in which X'' in the formula (I) is Br.

39. The radiation image storage panel as claimed in claim 31, in which $x$ in the formula (I) is a number satisfying the condition of $10^{-5} \leqq x \leqq 10^{-2}$.

**Patentansprüche**

1. Zweiwertiger, europiumaktivierter Komplexhalogenidleuchtstoff mit der Formel (I)

$$M^{II}X_2 \cdot aM^{II}X'_2 \cdot bM^{I}X'':xEu^{2+} \qquad (I)$$

worin $M^{II}$ wenigstens ein Erdalkalimetall, gewählt aus der Gruppe, bestehend aus Ba, Sr und Ca, ist; $M^{I}$ wenigstens ein Alkalimetall, gewählt aus der Gruppe, bestehend aus Rb und Cs, ist; jedes X und X' wenigstens ein Halogen, gewählt aus der Gruppe, bestehend aus Cl, Br und I, ist, und $X \neq X'$ ist; X'' wenigstens ein Halogen, gewählt aus der Gruppe, bestehend aus F, Cl, Br und I, ist; und a, b und x Zahlen sind, die den Bedingungen $0{,}1 \leqq a \leqq 10{,}0$, $0 < b \leqq 10{,}0$ und $0 < x \leqq 0{,}2$ genügen.

2. Leuchtstoff nach Anspruch 1, worin a in der Formel (I) eine Zahl ist, die der Bedingung $0{,}3 \leqq a \leqq 3{,}3$ genügt.

3. Leuchtstoff nach Anspruch 2, worin a in der Formel (I) eine Zahl ist, die der Bedingung $0{,}5 \leqq a \leqq 2{,}0$ genügt.

4. Leuchtstoff nach Anspruch 1, worin b in der Formel (I) eine Zahl ist, die der Bedingung $0 < b \leqq 2{,}0$ genügt.

5. Leuchtstoff nach Anspruch 1, worin $M^{II}$ in der Formel (I) Ba ist.

6. Leuchtstoff nach Anspruch 1, worin jedes X und X' in der Formel (I) Cl oder Br ist.

7. Leuchtstoff nach Anspruch 1, worin $M^{I}$ in der Formel (I) Cs ist.

8. Leuchtstoff nach Anspruch 1, worin X'' in der Formel (I) Br ist.

9. Leuchtstoff nach Anspruch 1, worin x in der Formel (I) eine Zahl ist, die der Bedingung $10^{-5} < x < 10^{-2}$ genügt.

10. Verfahren zur Herstellung eines zweiwertigen, europiumaktivierten Komplexhalogenidleuchtstoffs mit der Formel (I)

$$M^{II}X_2 \cdot aM^{II}X'_2 \cdot bM^{I}X'':xEu^{2+} \qquad (I)$$

worin $M^{II}$ wenigstens ein Erdalkalimetall, gewählt aus der Gruppe, bestehend aus Ba, Sr und Ca, ist; $M^{I}$ wenigstens ein Alkalimetall, gewählt aus der Gruppe, bestehend aus Rb und Cs, ist; jedes X und X' wenigstens ein Halogen, gewählt aus der Gruppe, bestehend aus Cl, Br und I, ist, und $X \neq X'$ ist; X'' wenigstens ein Halogen, gewählt aus der Gruppe, bestehend aus F, Cl, Br und I, ist; und a, b und x Zahlen sind, die den Bedingungen $0{,}1 \leqq a \leqq 10{,}0$, $0 < b \leqq 10{,}0$ und $0 < x \leqq 0{,}2$ genügen,

bei dem

die Ausgangsmaterialien für den Leuchtstoff in einem stöchiomerischen Verhältnis, entsprechend der Formel (II)

$$M^{II}X_2 \cdot aM^{II}X'_2 \cdot bM^{I}X'':xEu \qquad (II)$$

worin $M^{II}$, $M^{I}$, X, X', X'', a, b und x die gleiche Bedeutung wie vorstehend besitzen, gemischt werden und

die erhaltene Mischung einer Temperatur innerhalb des Bereichs von 500—1300°C in schwach reduzierender Atmosphäre gebrannt wird.

11. Verfahren nach Anspruch 10, worin a in der Formel (II) eine Zahl ist, die der Bedingung $0{,}3 \leqq a \leqq 3{,}3$ genügt.

12. Verfahren nach Anspruch 11, worin a in der Formel (II) eine Zahl ist, die der Bedingung $0{,}5 \leqq a \leqq 2{,}0$ genügt.

13. Verfahren nach Anspruch 10, worin b in der

Formel (II) eine Zahl ist, die der Bedingung $0<b\leqq 2,0$ genügt.

14. Verfahren nach Anspruch 10, worin $M^{II}$ in der Formel (II) Ba ist.

15. Verfahren nach Anspruch 10, worin jedes X und X' in der Formel (II) Cl oder Br ist.

16. Verfahren nach Anspruch 10, worin $M^I$ in der Formel (II) Cs ist.

17. Verfahren nach Anspruch 10, worin X'' in der Formel (II) Br ist.

18. Verfahren nach Anspruch 10, worin x in der Formel (II) eine Zahl ist, die der Bedingung $10^{-5}\leqq x\leqq 10^{-2}$ entspricht.

19. Verfahren nach Anspruch 10, worin die Mischung bei einer Temperatur innerhalb des Bereichs von 700—1000°C gebrannt wird.

20. Verfahren zur Aufzeichnung und Wiedergabe eines Strahlungsbildes, bei dem

i) bewirkt wird, daß eine Schicht, die einen zweiwertigen, europiumaktivierten Komplexhalogenidleuchtstoff mit der Formel (I)

$$M^{II}X_2 \cdot aM^{II}X'_2 \cdot bM^IX'':xEu^2 \qquad (I)$$

umfaßt,

worin $M^{II}$ wenigstens ein Erdalkalimetall, gewählt aus der Gruppe, bestehend aus Ba, Sr und Ca, ist; $M^I$ wenigstens ein Alkalimetall, gewählt aus der Gruppe, bestehend aus Rb und Cs, ist; jedes X und X' wenigstens ein Halogen, gewählt aus der Gruppe, bestehend aus Cl, Br und I, ist, und X=X' ist; X'' wenigstens ein Halogen, gewählt aus der Gruppe, bestehend aus F, Cl, Br und I, ist; und a, b und x Zahlen sind, die den Bedingungen $0,1\leqq a\leqq 10,0$, $0<b\leqq 10,0$ und $0<x\leqq 0,2$ genügen,

eine Strahlung, die durch ein Objekt geleitet worden ist oder aus einem Objekt gestrahlt worden ist, absorbiert;

ii) der anregbare Leuchtstoff einer elektromagnetischen Welle mit einer Wellenlänge innerhalb des Bereichs von 450 bis 1000 nm ausgesetzt wird, um die darin gespeicherte Strahlungsenergie als Lichtemission freizusetzen und

iii) des emittierte Licht nachgewiesen wird.

21. Verfahren zur Aufzeichung und Wiedergabe eines Strahlungsbildes nach Anspruch 20, worin a in der Formel (I) eine Zahl ist, die der Bedingung $0,3\leqq a\leqq 3,3$ genügt.

22. Verfahren zur Aufzeichnung und Wiedergabe eines Strahlungsbildes nach Anspruch 21, worin a in der Formel (I) eine Zahl ist, die der Bedingung $0,5\leqq a\leqq 2,0$ genügt.

23. Verfahren zur Aufzeichnung und Wiedergabe eines Strahlungsbildes nach Anspruch 20, worin b in der Formel (I) eine Zahl ist, die der Bedingung $0<b\leqq 2,0$ genügt.

24. Verfahren zur Aufzeichnung und Wiedergabe eines Strahlungsbildes nach Anspruch 20, worin $M^{II}$ in der Formel (I) Ba ist.

25. Verfahren zur Aufzeichnung und Wiedergabe eines Strahlungsbildes nach Anspruch 20, worin jedes X und X' in der Formel (I) Cl oder Br ist.

26. Verfahren zur Aufzeichnung und Wiedergabe eines Strahlungsbildes nach Anspruch 20, worin $M^I$ in der Formel (I) Cs ist.

27. Verfahren zur Aufzeichnung und Wiedergabe eines Strahlungsbildes nach Anspruch 20, worin X'' in der Formel (I) Br ist.

28. Verfahren zur Aufzeichnung und Wiedergabe eines Strahlungsbildes nach Anspruch 20, worin x in der Formel (I) eine Zahl ist, die der Bedingung $10^{-5}\leqq x\leqq 10^{-2}$ genügt.

29. Verfahren zur Aufzeichnung und Wiedergabe eines Strahlungsbildes nach Anspruch 20, worin die elektromagnetische Welle eine Wellenlänge innerhalb des Bereichs von 500—850 nm besitzt.

30. Verfahren zur Aufzeichnung und Wiedergabe eines Strahlungsbildes nach Anspruch 20, worin die elektromagnetische Welle ein Laserstrahl ist.

31. Strahlungsbildspeicherplatte bzw. -tafel, umfassend einen Träger und wenigstens eine darauf vorgesehene Leuchtstoffschicht, die ein Bindemittel und einen darin dispergierten anregbaren Leuchtstoff umfaßt, worin wenigstens eine Leichtstoffschicht einen zweiwertigen, europiumaktivierten Komplexhalogenidleuchtstoff mit der Formel (I)

$$M^{II}X_2 \cdot aM^{II}X'_2 \cdot bM^IX'':xEu^{2+} \qquad (I)$$

umfaßt,

worin $M^{II}$ wenigstens ein Erdalkalimetall, gewählt aus der Gruppe, bestehend aus Ba, Sr und Ca, ist; $M^I$ wenigstens ein Alkalimetall, gewählt aus der Gruppe, bestehend aus Rb und Cs, ist; jedes X und X' wenigstens ein Halogen, gewählt aus der Gruppe, bestehend aus Cl, Br und I, ist, und X=X' ist; X'' wenigstens ein Halogen, gewählt aus der Gruppe, bestehend aus F, Cl, Br und I, ist; und a, b und x Zahlen sind, die den Bedingungen $0,1\leqq a\leqq 10,0$, $0<b\leqq 10,0$ und $0<x\leqq 0,2$ genügen.

32. Strahlungsbildspeicherplatte nach Anspruch 31, worin a in der Formel (I) eine Zahl ist, die der Bedingung $0,3\leqq a\leqq 3,3$ genügt.

33. Strahlungsbildspeicherplatte nach Anspruch 32, worin a in der Formel (I) eine Zahl ist, die der Bedingung $0,5\leqq a\leqq 2,0$ genügt.

34. Strahlungsbildspeicherplatte nach Anspruch 31, worin b in der Formel (I) eine Zahl ist, die der Bedingung $0<b\leqq 2,0$ genügt.

35. Strahlungsbildspeicherplatte nach Anspruch 31, worin $M^{II}$ in der Formel (I) Ba ist.

36. Strahlungsbildspeicherplatte nach Anspruch 31, worin jedes X und X' in der Formel (I) Cl oder Br ist.

37. Strahlungsbildspeicherplatte nach Anspruch 31, worin $M^I$ in der Formel (I) Cs ist.

38. Strahlungsbildspeicherplatte nach Anspruch 31, worin X'' in der Formel (I) Br ist.

39. Strahlungsbildspeicherplatte nach Anspruch 31, worin x in der Formel (I) eine Zahl ist, die der Bedingung $10^{-5}\leqq x\leqq 10^{-2}$ genügt.

**Revendications**

1. Un produit luminescent en halogénure complexe activé par de l'europium divalent de formule (I):

$$M^{II}X_2 \cdot aM^{II}X'_2 \cdot bM^{I}X'':xEu^{2+} \quad (I)$$

où $M^{II}$ est au moins un métal alcalino-terreux choisi dans le groupe constitué de Ba, Sr et Ca; $M^{I}$ est au moins un métal alcalin choisi dans le groupe constitué de Rb et Cs; chacun de X et X' est au moins un halogène choisi dans le groupe constitué de Cl, Br et I et $X \neq X'$; X'' est au moins un halogène choisi dans le groupe constitué de F, Cl, Br et I; et *a*, *b* et *x* sont des nombres satisfaisant respectivement aux conditions $0{,}1 \leqq a \leqq 10{,}0$, $0 < b \leqq 10$ et $0 < x \leqq 0{,}2$.

2. Le produit luminescent tel que revendiqué à la revendication 1, dans lequel *a* dans la formule (I) est un nombre satisfaisant à la condition $0{,}3 \leqq a \leqq 3{,}3$.

3. Le produit luminescent tel que revendiqué à la revendication 2, dans lequel *a* dans la formule (I) est un nombre satisfaisant à la condition $0{,}5 \leqq a \leqq 2{,}0$.

4. Le produit luminescent tel que revendiqué à la revendication 1, dans lequel *b* dans la formule (I) est un nombre satisfaisant à la condition $0 < b \leqq 2{,}0$.

5. Le produit luminescent tel que revendiqué à la revendication 4, dans lequel $M^{II}$ dans la formiule (I) est Ba.

6. Le produit luminescent tel que revendiqué à la revendication 1, dans lequel chacun de X et X' dans la formule (I) est Cl ou Br.

7. Le produit luminescent tel que revendiqué à la revendication 1, dans lequel $M^{I}$ dans la formule (I) est Cs.

8. Le produit luminescent tel que revendiqué à la revendication 1, dans lequel X'' dans la formule (I) est Br.

9. Le produit luminescent tel que revendiqué à la revendication 8, dans lequel *x* dans la formule (I) est un nombre satisfaisant à la condition $10^{-5} \leqq x \leqq 10^{-2}$.

10. Un procédé pour la préparation d'un produit luminescent en halogénure complexe activé par de l'europium divalent de formule (I):

$$M^{II}X_2 \cdot aM^{II}X'_2 \cdot bM^{I}X'':xEu^{2+} \quad (I)$$

où $M^{II}$ est au moins un métal alcalino-terreux choisi dans le groupe constitué de Ba, Sr et Ca; $M^{I}$ est au moins un métal alcalin choisi dans le groupe constitué de Rb et Cs; chacun de X et X' est au moins un halogène choisi dans le groupe constitué de Cl, Br et I, et $X \neq X'$; X'' est au moins un halogène choisi dans le groupe constitué de F, Cl, Br et I; *a*, *b* et *x* sont des nombres satisfaisant respectivement aux conditions $0{,}1 \leqq a \leqq 10{,}0$, $0 < b \leqq 10{,}0$ et $0 < x \leqq 0{,}2$,

qui comprend

le mélange des matériaux de départ dans un rapport stoechiométrique correspondant à la formule (II):

$$M^{II}X_2 \cdot aM^{II}X'_2 \cdot bM^{I}X'':xEu \quad (II)$$

où $M^{II}$, $M^{I}$, X, X', X'', *a*, *b* et *x* ont la même signification que comme ce qui a été décrit précédemment; et

le brûlage du mélange obtenu à une température comprise entre 500 et 1300°C, dans une atmosphère de réduction faible.

11. Le procédé tel que revendiqué à la revendication 10, dans lequel *a* dans la formule (II) est un nombre satisfaisant à la condition $0{,}3 \leqq a \leqq 3{,}3$.

12. Le procédé tel que revendiqué à la revendication 11, dans lequel *a* dans la formule (II) est un nombre satisfaisant à la condition $0{,}5 \leqq a \leqq 2{,}0$.

13. Le procédé tel que revendiqué à la revendication 12, dans lequel *b* dans la formule (II) est un nombre satisfaisant à la condition $0 < b \leqq 2{,}0$.

14. Le procédé tel que revendiqué à la revendication 10, dans lequel $M^{II}$ dans la formule (II) est Ba.

15. Le procédé tel que revendiqué à la revendication 10, dans lequel chacun de X et X' dans la formule (II) est Cl ou Br.

16. Le procédé tel que revendiqué à la revendication 10, dans lequel $M^{I}$ dans la formule (II) est Cs.

17. Le procédé tel que revendiqué à la revendication 10, dans lequel X'' dans la formule (II) est Br.

18. Le procédé tel que revendiqué à la revendication 10, dans lequel *x* dans la formule (II) est un nombre satisfaisant à la condition $10^{-5} \leqq x \leqq 10^{-2}$.

19. Le procédé tel que revendiqué à la revendication 10, dans lequel ledit mélange est brûlé à une température comprise entre 700 et 1000°C.

20. Une méthode d'enregistrement et de reproduction d'une image obtenue par un rayonnement comprenant les étapes au cours desquelles:

i) un rayonnement ayant traversé un objet ou ayant rayonné à partir d'un objet doit être absorbé par une couche comprenant un produit luminescent en halogénure complexe activé par le d'europium divalent de formule (I):

$$M^{II}X_2 \cdot aM^{II}X'_2 \cdot bM^{I}X'':xEu^{2+} \quad (I)$$

où $M^{II}$ est au moins un métal alcalino-terreux choisi dans le groupe constitué de Ba, Sr et Ca; $M^{I}$ est au moins un métal alcalin choisi dans le groupe constitué de Rb et Cs; chacun de X et X' est au moins un halogène choisi dans le groupe constitué de Cl, Br et I, et $X \neq X'$; X'' est au moins un halogène choisi dans le groupe constitué de F, Cl, Br et I; et *a*, *b* et *x* sont des nombres satisfaisant respectivement aux conditions $0{,}1 \leqq a \leqq 10{,}0$, $0 < b \leqq 10{,}0$ et $0 < x \leqq 0{,}2$;

ii) ledit produit luminescent stimulable est exposé à une onde électromagnétique ayant une longueur d'ondes comprise dans la gamme de 450 à 1000 nm, pour libérer l'énergie de rayonnement stockée dedans comme émission de lumière; et

iii) la lumière émise est détectée.

21. La méthode d'enregistrement et de reproduction d'une image obtenue par un rayonnement tel que revendiqué à la revendication 20, dans laquelle *a* dans la formule (I) est un nombre satisfaisant à la condition $0{,}3 \leqq a \leqq 3{,}3$.

22. La méthode d'enregistrement et de reproduction d'une image obtenue par un rayonnement tel que revendiqué à la revendication 21, dans laquelle *a* dans la formule (I) est un nombre satisfaisant à la condition $0,5 \leqq a \leqq 2,0$.

23. La méthode d'enregistrement et de reproduction d'une image obtenue par un rayonnement tel que revendiqué à la revendication 20, dans laquelle *b* dans la formule (I) est un nombre satisfaisant à la condition $0 < b \leqq 2,0$.

24. La méthode d'enregistrement et de reproduction d'une image obtenue par un rayonnement tel que revendiqué à la revendication 20, dans laquelle $M^{II}$ dans la formule (I) est Ba.

25. La méthode d'enregistrement et de reproduction d'une image obtenue par un rayonnement tel que revendiqué à la revendication 20, dans laquelle chacun de X et X' dans la formule (I) est Cl ou Br.

26. La méthode d'enregistrement et de reproduction d'une image obtenue par un rayonnement tel que revendiqué à la revendication 20, dans laquelle $M^{I}$ dans la formule (I) est Cs.

27. La méthode d'enregistrement et de reproduction d'une image obtenue par un rayonnement tel que revendiqué à la revendication 20, dans laquelle X'' dans la formule (I) est Br.

28. La méthode d'enregistrement et de reproduction d'une image obtenue par un rayonnement tel que revendiqué à la revendication 20, dans laquelle *x* dans la formule (I) est un nombre satisfaisant à la condition $10^{-5} \leqq x \leqq 10^{-2}$.

29. La méthode d'enregistrement et de reproduction d'une image obtenue par un rayonnement tel que revendiqué à la revendication 20, dans laquelle ladite onde électromagnétique est une onde ayant une longueur d'ondes comprise dans la gamme de 500 à 850 nm.

30. La méthode d'enregistrement et de reproduction d'une image obtenue par un rayonnement tel que revendiqué à la revendication 20, dans laquelle ladite onde électromagnétique est un faisceau laser.

31. Un panneau de stockage d'une image obtenue par un rayonnement comprenant un support et au moins une couche de produit luminescent disposée dessus, qui comprend un liant et un produit luminescent stimulable dispersé dedans, dans lequel au moins une couche de produit luminescent contient un produit luminescent en halogénure complexe activé par de l'europium divalent de formule (I):

$$M^{II}X_2 \cdot aM^{II}X'_2 \cdot bM^{I}X'':xEu^{2+} \qquad (I)$$

où $M^{II}$ est au moins un métal alcalino-terreux choisi dans le groupe constitué de Ba, Sr et Ca; $M^{I}$ est au moins un métal alcalin choisi dans le groupe constitué de Rb et Cs; chacun de X et X' est au moins un halogène choisi dans le groupe constitué de Cl, Br et I, et $X \neq X'$; X'' est au moins un halogène choisi dans le groupe constitué de F, Cl, Br et I; et *a*, *b* et *x* sont des nombres satisfaisant respectivement aux conditions $0,1 \leqq a \leqq 10,0$, $0 < b \leqq 10,0$ et $0 < x \leqq 0,2$.

32. Le panneau de stockage d'une image obtenue par un rayonnement tel que revendiqué à la revendication 31, dans lequel *a* dans la formule (I) est un nombre satisfaisant à la condition $0,3 \leqq a \leqq 3,3$.

33. Le panneau de stockage d'une image obtenue par un rayonnement, tel que revendiqué à la revendication 32, dans lequel *a* dans la formule (I) est un nombre satisfaisant à la condition $0,5 \leqq a \leqq 2,0$.

34. Le panneau de stockage d'une image obtenue par un rayonnement tel que revendiqué à la revendication 31, dans lequel *b* dans la formule (I) est un nombre satisfaisant à la condition $0 < b \leqq 2,0$.

35. Le panneau de stockage d'une image obtenue par un rayonnement tel que revendiqué à la revendication 31, dans lequel $M^{II}$ dans la formule (I) est Ba.

36. Le panneau de stockage d'une image obtenue par un rayonnement tel que revendiqué à la revendication 31, dans lequel chacun de X et X' dans la formule (I) est Cl ou Br.

37. Le panneau de stockage d'une image obtenue par un rayonnement tel que revendiqué à la revendication 31, dans lequel $M^{I}$ dans la formule (I) est Cs.

38. Le panneau de stockage d'une image obtenue par un rayonnement tel que revendiqué à la revendication 31, dans lequel X'' dans la formule (I) est Br.

39. Le panneau de stockage d'une image obtenue par un rayonnement tel que revendiqué à la revendication 31, dans lequel *x* dans la formule (I) est un nombre satisfaisant à la condition $10^{-5} \leqq x \leqq 10^{-2}$.

FIG. 1

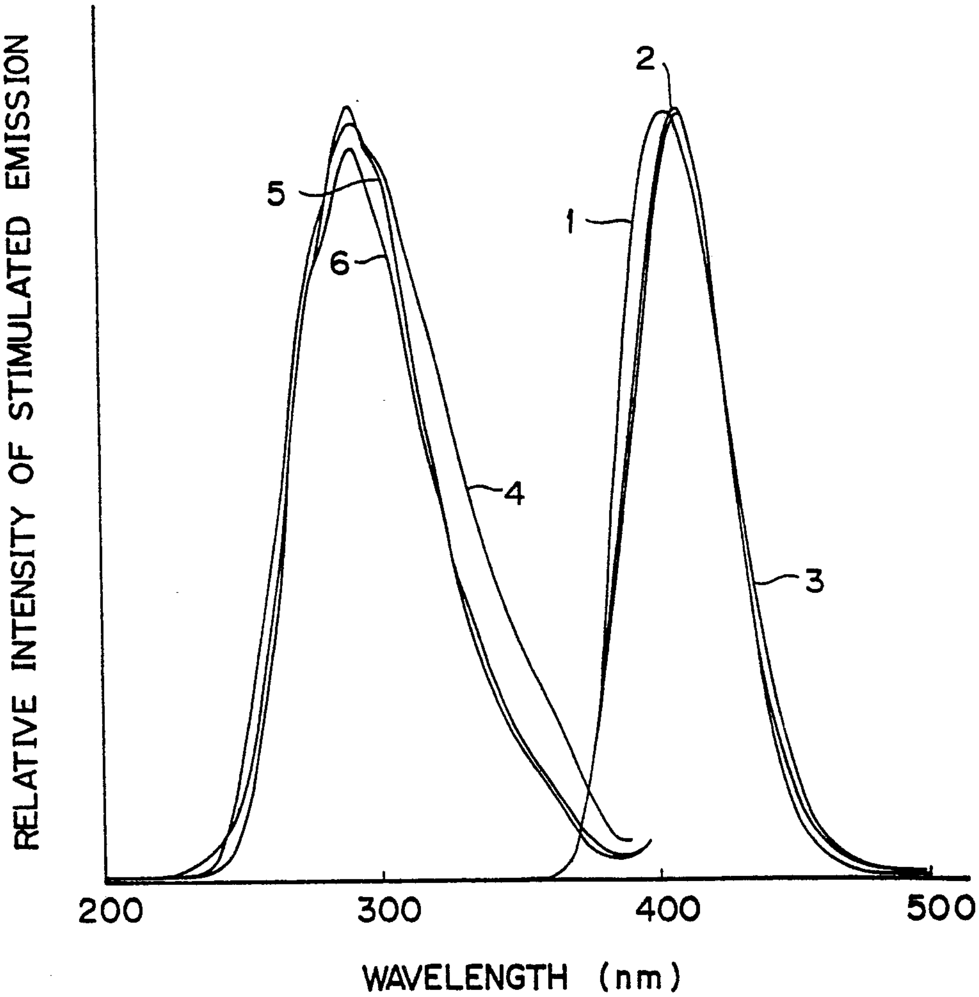
RELATIVE INTENSITY OF STIMULATED EMISSION
1
2
3
4
5
6
200
300
400
500
WAVELENGTH (nm)

F I G. 2(1)

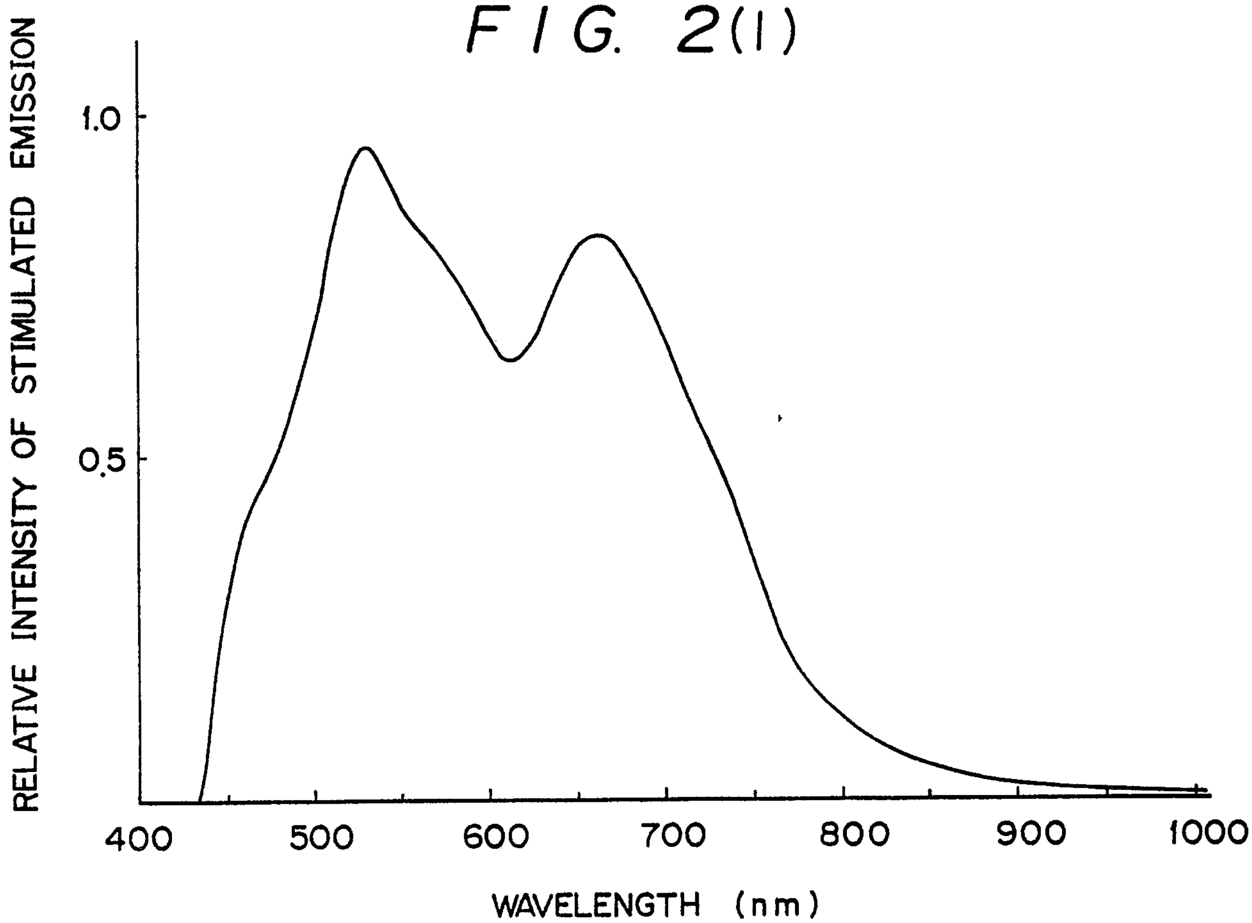
RELATIVE INTENSITY OF STIMULATED EMISSION
1.0
0.5
400
500
600
700
800
900
1000
WAVELENGTH (nm)

FIG. 2(2)

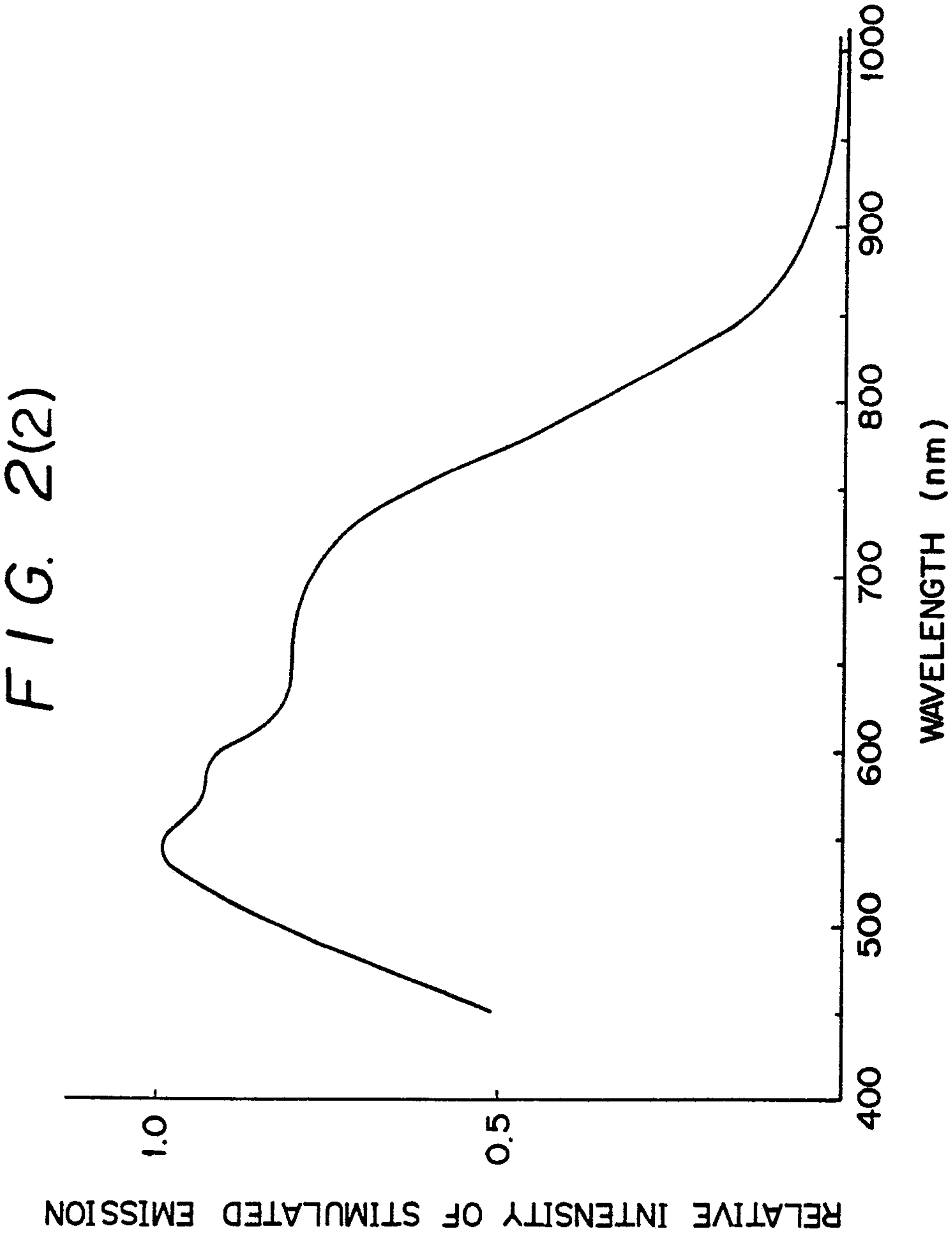
RELATIVE INTENSITY OF STIMULATED EMISSION
1.0
0.5
400
500
600
700
800
900
1000
WAVELENGTH (nm)

F I G. 2(3)

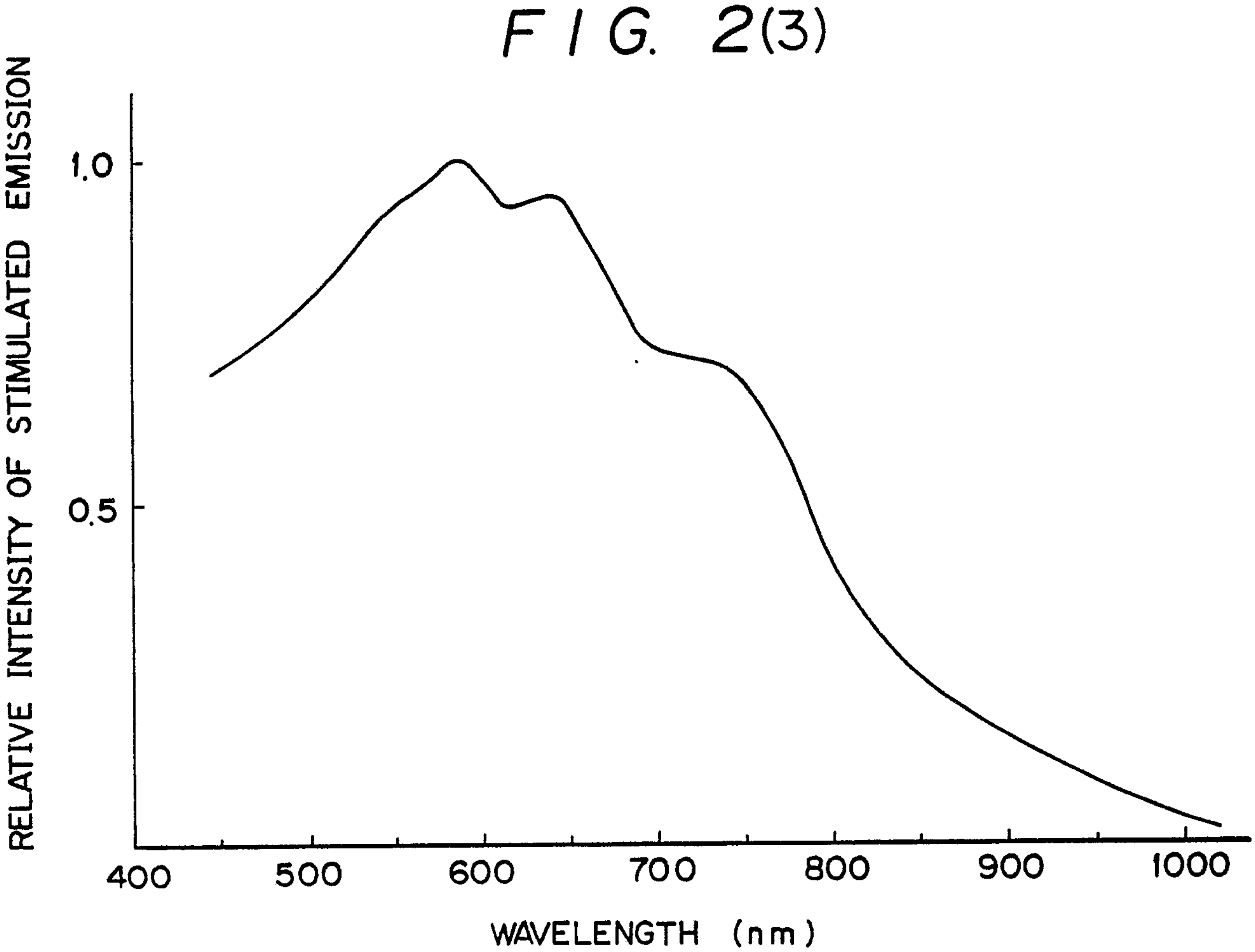
RELATIVE INTENSITY OF STIMULATED EMISSION
1.0
0.5
400
500
600
700
800
900
1000
WAVELENGTH (nm)

FIG. 3

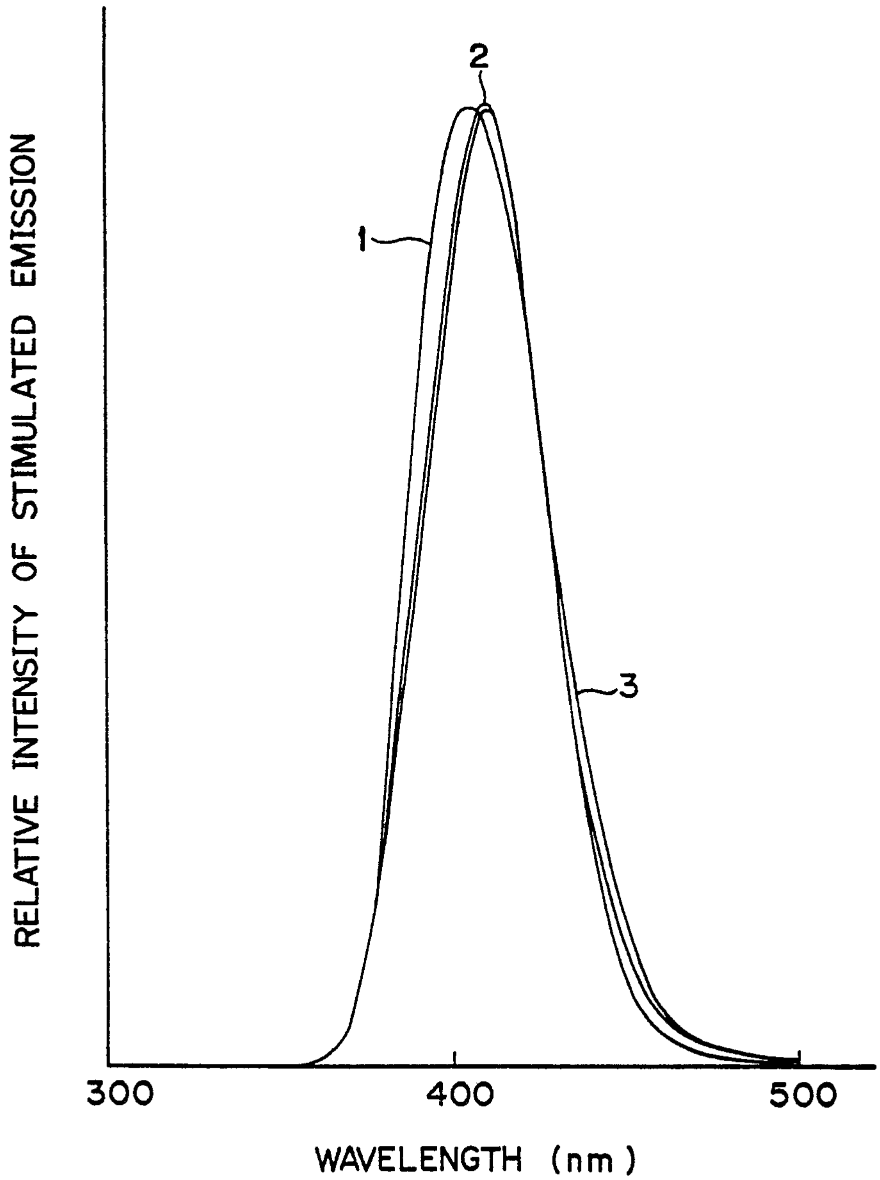
RELATIVE INTENSITY OF STIMULATED EMISSION
2
1
3
300
400
500
WAVELENGTH (nm)

FIG. 4

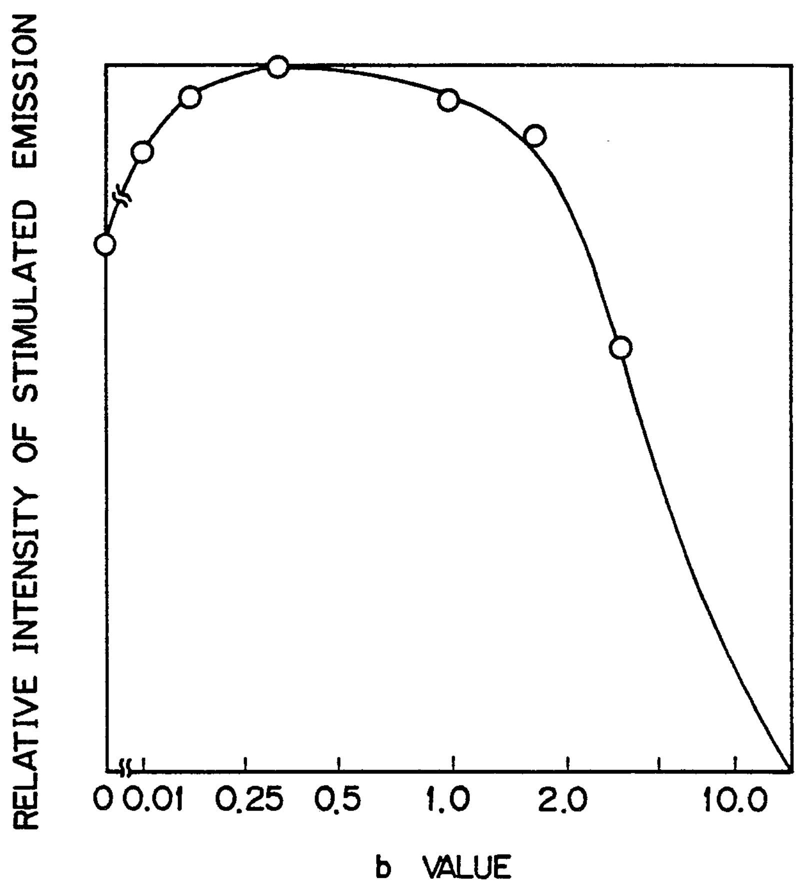
RELATIVE INTENSITY OF STIMULATED EMISSION
0
0.01
0.25
0.5
1.0
2.0
10.0
b VALUE

FIG. 5

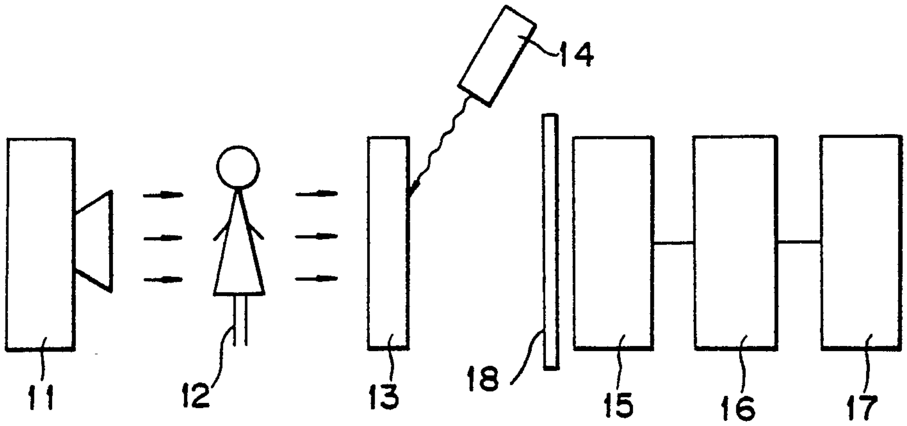

FIG. 6

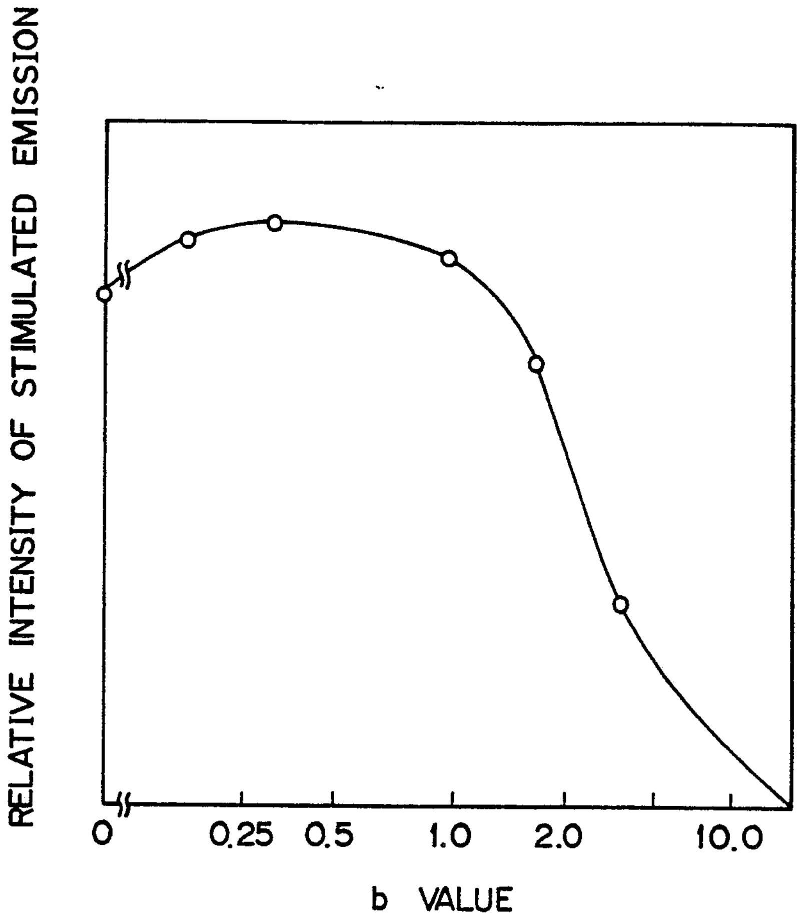
RELATIVE INTENSITY OF STIMULATED EMISSION
0
0.25
0.5
1.0
2.0
10.0
b VALUE